# EUROPEAN PATENT SPECIFICATION

(11) **EP 4 488 124 B1**
(45) Date of publication and mention of the grant of the patent: **02.12.2026**
(21) Application number: 23184166.9
(22) Date of filing: 07.07.2023
(51) Int. Cl.: B60R 16/02, F16L 3/08, F16L 5/02

(54) **CABLE SLEEVE ASSEMBLY**
KABELMUFFENANORDNUNG
ENSEMBLE MANCHON DE CÂBLE

(43) Date of publication of application: 08.01.2025
(73) Proprietor: Aptiv Manufacturing Management Services GmbH, 8200 Schaffhausen (CH)
(72) Inventor: LESNIAK, Wojciech, 30-389 Kraków (PL); SLIZOWSKI, Tomasz, 30-693 Kraków (PL); JANCZYK, Rafal, 30-703 Kraków (PL); CIESZYNSKI, Michal, 30-612 Kraków (PL)
(74) Representative: Bardehle Pagenberg Partnerschaft mbB Patentanwälte Rechtsanwälte

(56) References cited:
- EP-A1- 3 333 997
- WO-A1-2022/154047
- CA-A1- 2 623 397
- CN-A- 108 351 049
- CN-A- 111 463 730
- CN-A- 112 739 940
- CN-C- 1 171 367
- US-A- 5 545 854
- US-B2- 6 595 473

## Description

### 1. Field of the invention

The present invention generally relates to a cable sleeve assembly for mounting on a part, such as a vehicle body part, and to a respective method for assembling a cable sleeve assembly with one or more cables.

### 2. Background

In recent years the automotive sector has been facing a shift towards electric vehicles, such as cars. This is accompanied by an increasing number of electrical and electronic devices that need to be connected, which results in a rapid increase of electric cables and/or harnesses to facilitate provision of electrical connection. This increase of electric cables leads to an increased space occupied by them. Grommets are usually employed to guide electric cables through them and to protect them from potential environmental impacts.

The varying space occupied by cables, which can depend on the number and thickness of cables calls for improved means to receive and accommodate the cables. Moreover, when grommets are used to guide electric cables through them, the grommets are usually provided with a grommet clip having a through hole. This facilitates that the grommet can be mounted onto a part of the vehicle body and that electric cables can be further guided into other vehicle body parts within the grommet.

Such grommet clips usually limit the free passage of the grommet during assembly with the electric cables and/or harnesses.

US 2018/0297542 discloses a cable sleeve assembly for mounting on a part, such as a vehicle body part, the cable sleeve assembly comprising a cable sleeve for receiving one or more cables, a connection means comprising an opening.

In known solutions, there are two types of grommets with such mounting clips.

One type is a grommet clip that is overmolded with the grommet. Such types have the disadvantage of being cost intensive. Further, the overmolded clip is required to be large enough such that electric cables with rather large connectors can be guided through the grommet and the clip.

Another type is a mounting clip that is already assembled with the grommet so as to mount the grommet using the assembled grommet clip to a part of a vehicle body. This type has the disadvantage that the opening of the grommet clip predefines the maximum allowable connector size of the electric cables than can be guided through the grommet. Hence, any deformation of the grommet for guiding an electric cable with a connector therethrough may be ineffective as the opening represent a bottleneck.

The two types have the further disadvantage that for any desired electric cables with connectors, the grommet and the clip need to be adapted.

In view of the foregoing, there is a need to improve grommets with grommet clips.

It is thus an object of the present invention to overcome some or all of the deficiencies of the prior art. In particular, it is an object to provide an improved cable sleeve assembly, which allows to receive and guide electric cables and/or harnesses with connectors easily and in a flexible manner therethrough. The electric cables and/or harnesses should have an improved fixation and the cable sleeve assembly should be cost-effective. The flexibility during the assembling process should be increased. Moreover, a change of design of any part of the cable sleeve assembly should be independent from another part thereof. Moreover, it is an object to provide a respective method for assembling a cable sleeve assembly with cables.

### 3. Summary

The above-mentioned objects are at least partially achieved by the subject-matter of the independent claims. Preferred embodiments are subject of the dependent claims, and the skilled person finds hints for other suitable aspects of the present invention through the overall disclosure of the present application.

An aspect of the invention relates to a cable sleeve assembly for mounting on a part, such as a vehicle body part, the cable sleeve assembly comprising: a cable sleeve for receiving one or more cables, such as a harness for a vehicle; a connection means comprising an opening configured to receive and to substantially hold the cable sleeve, the connection means configured to be mounted on the part, such as the vehicle body part; wherein the connection means is split into at least two pieces, preferably two pieces, which allows the size of the opening to be increased and/or decreased.

In this manner, the present disclosure provides a cable sleeve assembly, which improves assembling of a cable sleeve with one or more cables and the connection means to a part such as a vehicle body part. For instance, due to increasing and/or decreasing the size of the opening, the connection means may be assembled in a last step of the process. This facilitates that the opening in an assembled state can be made rather small. In the prior art, the size of the opening can only be increased and/or decreased by damaging said connection means, i.e., by destructive measures. This is because the connection means is usually a rigid and integrally formed plastic part.

Moreover, the cables are also fixed to a better degree, as the free space between the opening and/or the cable sleeve and the cables can be kept rather small. This also facilitates that the cables are protected to a greater extent from environmental impacts. In particular, the cables may be subject to less relative movements due to shocks occurring, e.g., during ordinary use of a vehicle or the like.

In particular, the free passage area of the opening can be reduced in an assembled state. Moreover, the cable sleeve can be adapted to specific opening shapes and or sizes easily. Further, merely the connection means or merely the cable sleeve may require any adaption in case of design changes. Due to such a modular design, the cable sleeve assembly is more cost effective and facilitates an easy adjustment for different surroundings. This is particularly advantageous in the automotive sector.

The cable sleeve may be any part for sleeving, housing, encompassing one or more cables so as to protect and/or guide them. The cable sleeve may be deformable. In one example, the cable sleeve may be a grommet or a part of a grommet. Further, the cable sleeve can be applied in various environments and field of applications.

The connection means may be any part for receiving, holding and/or securing the cable sleeve. The connection means may be a part that can be mounted to a part of a vehicle to provide for a rather fixed arrangement. The connection means could be made from a rather rigid material (e.g., in comparison to the cable sleeve) so as to support the cable sleeve on a part of the vehicle.

The connection means being split into at least two pieces may be understood such that the at least two pieces could be spaced apart at least partially at one or more portions of their surfaces. The size of the opening can thereby be increased and/or decreased. This has the advantage that the connection means is not damaged, destructed, or the like when increasing and/or decreasing the size of the opening. The size of the opening may be, for instance, the cross-sectional area of the opening. As an example, the normal of the cross-sectional area of the opening may be aligned substantially parallel to the receiving direction of the cable sleeve as described elsewhere herein. In one example, the connection means is split from an inner surface of the opening to an outer surface of the connection means.

The connection means can be split in more than two pieces. However, splitting in two pieces provides more stiffness and facilitates assembly by the operator.

In a preferred embodiment, the cable sleeve comprises at least two circumferential protrusions on its periphery spaced apart to one another along a receiving direction RD of the cable sleeve to the opening, wherein the at least two circumferential protrusions are substantially abutting the connection means in between.

The protrusions facilitate that the cable sleeve can be secured on the connection means and/or held thereby. As described elsewhere herein, a gap (or slot) may be established by way of the pieces of the connection means (when being in an assembled state), which further facilitates securing the cable sleeve on the connection means. The two protrusions are spaced apart typically by an amount substantially corresponding to the thickness of the connection means in the receiving direction RD in proximity to the opening. The protrusions may be spaced apart by a smaller amount to increase an axial clamping.

It is understood that at least one circumferential protrusion may already be sufficient to provide for at least some of the advances mentioned herein. Thereby, the cable sleeve does not necessarily need to comprise at least two circumferential protrusions.

The receiving direction may be understood as the direction along which the cable sleeve is received in the opening. Usually, the cable sleeve may have an elongate shape and the receiving direction is along said elongate shape. The receiving direction may additionally or alternatively be the direction in which one or more cables can be received in the cable sleeve.

In a preferred embodiment, the at least two pieces are separable to define a disassembled state and connectable to define an assembled state, preferably via a clip connection, optionally, wherein the clip connection comprises a lever protruding away from the connection means by an angle (α) of between 20° to 70°, preferably 25° to 65°, preferably 30° to 60°, preferably 35° to 55°, preferably 40° to 50°.

Disassembling and assembling facilitates that the connection means can be easily handled. For instance, it could be disassembled so as to rearrange the cable sleeve and assembled to substantially hold and/or clamp the cable sleeve.

The clip connection allows an easy, fast, and reliable connection. The clip connection may comprise a snack lock connection.

The lever has the advantage that the clip connection can be easily triggered, e.g, released or the like. This may be performed by hands of an operator and/or by any automated means, such as a robot.

The lever protrudes, which means that it extends from the connection means at least partially. The lever may extend further than an outer periphery of a rather flat main part of the connection means. In this manner, the lever may be recognized more easily, which facilitates triggering said lever.

The angle of the lever as defined herein should not be too small, to facilitate that the lever does not inadvertently break or gets damaged. Further, the angle of the lever should not be too large to allow easy release or the like of the clip connection.

Thus, the inventors found that an optimal balance of these contradicting requirements can be ensured according to the values specified in here.

Preferably, the at least two pieces at least partially overlap one another in the assembled state as seen in a receiving direction RD of the cable sleeve to the opening, preferably wherein the area of overlapping is at least 10%, preferably at least 20%, preferably at least 30% of the area of the connection means seen in a receiving direction RD of the cable sleeve to the opening. Particularly, an area of at least 20% has proven to be beneficial. Optionally the area of overlapping is at most 80%, preferably at most 60%, preferably at most 50%, preferably at most 40% of the area of the connection means seen in a receiving direction RD of the cable sleeve to the opening.

The overlapping improves fixing the two pieces of the connection means together. In addition, the connection means is thereby rather stiff. Thereby, a force acting on the connection means along the receiving direction may be equally distributed along the overlapping area of the two pieces.

The overlapping should not be too large and not be too small to provide for sufficient fixing whilst using as little material of the connection means as possible. Thus, the values specified in here provide an optimal balance of these contradicting requirements.

Preferably, the opening has a substantially circular shape and substantially fully surrounds a portion of the cable sleeve in the assembled state, wherein the opening is split substantially in at least two halves, preferably two halves (e.g., in case the connection means being split into two parts), such that each of the pieces comprises a substantially circular segment shaped recess, preferably a semi-circular shaped recess, in an outer surface thereof.

A circular shape has the advantage that essentially no sharp edges, corners, or the like are present, which could cause damage to the cable sleeve. Moreover, a circular shape may be easily manufactured. It is understood that the substantially circular shape is to be recognized when the two pieces are connected. In case the two pieces are spaced apart, not connected, and/or disassembled, such a substantially circular shape may not be recognized as understood by the skilled person.

As understood, the opening could be split into a plurality of segments, i.e., into four quarter circles for instance.

Other shapes than substantially circular shapes are certainly encompassed according to the present disclosure. For instance, the opening may have an elliptical, rectangular, triangular shape or combinations thereof. Moreover, the shape of the opening may comprise circular sections and/or straight section along its perimeter. In some cases, although not preferred, the shape has one or more edges and/or corners. In one example, the shape may be non-circular.

The portion of the cable sleeve may be understood as a portion of any length in the receiving direction of the cable sleeve to the opening. This length may be understood as an axial length. Preferably, the portion may be as long as the distance between two protrusions of the cable sleeve as described elsewhere herein.

For instance, a rather short length of the portion may already be sufficient for the above-mentioned advantageous effects to become apparent.

The opening being split substantially in at least two halves does not necessarily mean that the two halves are identical. However, in case the two halves of the opening are substantially identical, e.g., symmetrical, this could have advantages in terms of manufacturing and/or assembling.

In a preferred embodiment, the maximum dimension of the opening in the assembled state is smaller than a minimum dimension of a connector attached to the one or more cables seen in a plane projecting through the opening.

This has the advantage that the opening may not be the bottleneck for assembling cables with connectors attached thereto. The opening can be made rather small in the assembled state. This may be the case, because it is possible to increase the opening without any damage to the connection means, e.g., by virtue of a disassembled state.

In a preferred embodiment, the cable sleeve comprises a relatively flexible material, preferably comprising a deformable material, more preferably comprising rubber, such as ethylene-propylene-diene rubber (EPDM), wherein the connection means comprises a relatively rigid material, preferably comprising plastic material.

The flexible material has the advantage that the cable sleeve can be easily stretched to a certain size so as to guide therethrough one or more cables, in particular if the cables have a connector attached thereto. Such connector typically occupies a rather large space compared to the cables and, hence, requires stretching of the cable sleeve. The rubber has the advantage that it can be easily procured and constitutes a cost-effective material. Hence, manufacturing of the cable sleeve can be improved. Further, it has proven beneficial to use materials, which are already accepted in different industrial fields.

The relatively rigid material has the advantage that the cable sleeve can be held and/or clamped in a substantially reliable, predictable, and repeatable manner. This serves the purpose that the cable sleeve is substantially secured and held in place in the opening.

In a preferred embodiment, the connection means is a mounting clip having a substantially flat shape, wherein the opening is arranged substantially in a central position of the mounting clip.

This has the advantage that the cable sleeve can be easily received in the opening. Moreover, a flap shape occupies only as much space as needed. The term substantially means that tolerances, such as manufacturing tolerances, are included. For instance, a substantially central position does not necessarily require a central position from a mathematical point of view.

In a preferred embodiment, the mounting clip has a wall thickness in a receiving direction RD of the cable sleeve to the opening of at most 10 mm, preferably at most 5 mm, preferably at most 4 mm, preferably at most 3 mm, preferably at most 2.5 mm, preferably at most 2 mm; and/or of at least 0.5 mm, preferably at least 1 mm, preferably at least 1.5 mm.

In this manner, it is ensured that the mounting clip provides sufficient stability and/or rigidity to hold the cable sleeve in position and to be mounted on a vehicle body part. In addition, only as much material as necessary is needed. Holding and/or securing of the cable sleeve is additionally supported by way of a gap (or slot) established by the pieces of the connection means when assembled as described elsewhere herein in greater detail.

In a preferred embodiment, the opening encompasses at least 10%, preferably at least 20%, preferably at least 30%, of the area of the mounting clip seen in a receiving direction RD of the cable sleeve to the opening, and/or of at most 95%, preferably at most 90%, preferably at most 80%, preferably at most 70%, preferably at most 60%, preferably at most 50%, preferably at most 40% of the area of the connection means seen in a receiving direction RD of the cable sleeve to the opening.

The opening in the assembled state can be designed to be rather small as described elsewhere herein. Hence, the opening only needs to encompass a rather small area of the mounting clip. However, it should be sufficient enough to properly receive the cable sleeve. Hence, the inventors paved a way for an improved opening by virtue of the relative values as defined herein.

In a preferred embodiment, the connection means comprises one or more attachment clips for mounting the connection means on the part, such as the vehicle body part.

The attachment clips allows for a mounting in a simplified, and easy manner. This way of mounting is a form that can be repeated easily, e.g., the connection means could be dismounted and mounted again somewhere else or at the same location easily. The connection means may have one smooth surface and/or a structured surface, preferably on an opposing side of the smooth surface. The attachment clips may be provided on the structured surface. The lever may also be provided on the structured surface. The smooth surface may increase the optical appearance of the cable sleeve assembly. The structured surface may facilitate mounting.

In a preferred embodiment, the cable sleeve is received in the opening and the opening substantially holds, preferably clamps the cable sleeve. As described elsewhere herein, a part of the cable sleeve (such as a protrusion thereof) may be received in a gap (or slot) at a circumference of the opening, which further improves securing of the cable sleeve. Optionally, the connection means is mounted on the part, such as the vehicle body part.

In this manner, a state is described according to which the cable sleeve assembly is provided in a condition, according to which it is mounted.

In a preferred embodiment, the cable sleeve assembly comprises one or more cables received in the cable sleeve, the one or more cables having a connector attached thereto, wherein the maximum dimension of the opening is smaller than a minimum dimension of the connector seen in a plane projecting through the opening.

A further aspect concerns a method for assembling a cable sleeve assembly with one or more cables having a connector attached thereto, the method comprising: providing a cable sleeve assembly as described herein, preferably in a disassembled state; guiding one or more cables, such as a harness for a vehicle, having a connector attached thereto, at least partially through the cable sleeve; connecting the connection means so as to substantially hold the cable sleeve within the opening, preferably to substantially clamp the cable sleeve in the opening.

The method facilitates assembling the cable sleeve with one or more cables, in particular with cables having a connector attached at one or both ends thereof in an improved manner.

Preferably, the method further comprises: after guiding one or more cables and before connecting the connection means: receiving and substantially holding the cable sleeve in the opening, preferably in a circular segment shaped recess, more preferably in a semi-circular shaped recess, of an outer surface of one or both of the at least two pieces, preferably wherein connecting comprises connecting the at least two pieces via a clip connection, preferably wherein the method further comprises mounting the connection means to the part, such as the vehicle body part.

It is noted that the features, aspects, embodiments and/or advantages as described herein with reference to the cable sleeve assembly are likewise applicable to the method for assembling a cable sleeve assembly with one or more cables.

### 4. Brief description of the figures

In the following, preferred embodiments of the disclosure are disclosed by reference to the accompanying figure.
- Fig. 1:: illustrates a cable sleeve assembly according to an embodiment of the present invention in an oblique view from the top.
- Fig. 2:: illustrates the embodiment of Fig. 1 in an oblique view from the bottom.
- Fig. 3:: illustrates the embodiment of Fig. 1 in a greater view with an exemplary cable and an exemplary connector.
- Fig. 4:: illustrates the embodiment of Fig. 1 in a cross-sectional view.
- Fig. 5A:: illustrates the connection means of the embodiment of Fig. 1 in a top view.
- Fig. 5B:: illustrates the connection means of the embodiment of Fig. 1 in a bottom view.
- Fig. 6A:: illustrates the connection means of the embodiment of Fig. 1 in an oblique view from the top.
- Fig. 6B:: illustrates the connection means of the embodiment of Fig. 1 in an oblique view from the bottom.

### 5. Detailed description of the figures

The term harness as used herein may also be referred to as a cable harness, wire harness, wiring harness, cable assembly, wiring assembly. The term may be understood as an assembly of electrical cables or wires for transmitting signals or electrical power. The harness may comprise one or more cables/wires. The cables/wires may be bound together.

In the subsequent passages, the invention is described with reference to the accompanying figures in more detail. It is noted that further embodiments are certainly possible, and the below explanations are provided by way of example only, without limitation. Throughout the present figures and specification, the same reference numerals refer to the same elements. The figures may not be to scale, and the relative size, proportions, and depiction of elements in the figures may be exaggerated for clarity, illustration, and convenience.

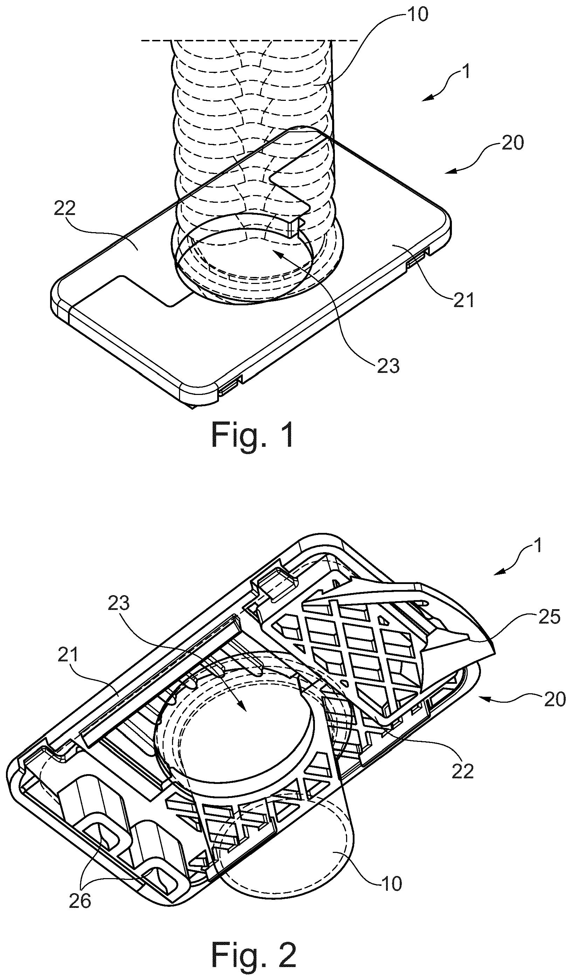

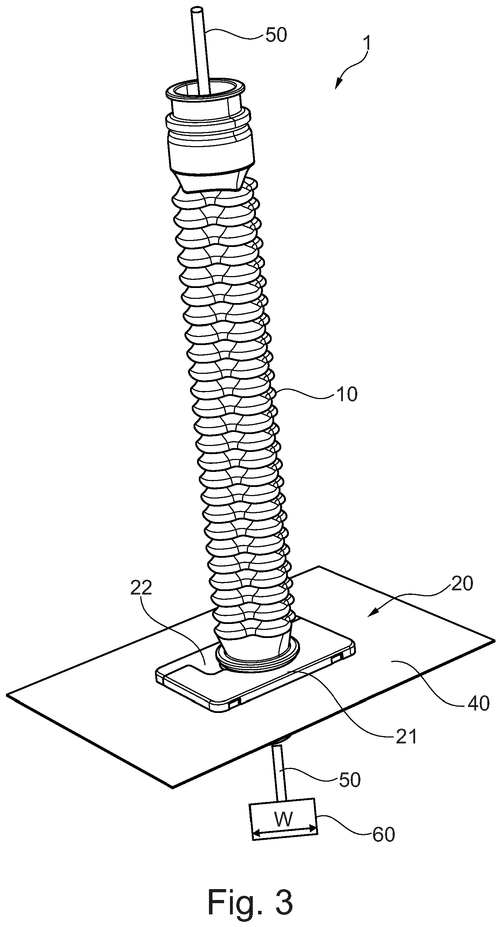

**Fig. 1** illustrates a cable sleeve assembly 1 according to an embodiment of the present invention in an oblique view from the top. **Fig. 2** illustrates the same embodiment in an oblique view from the bottom. **Fig. 3** illustrates the same embodiment in a greater view with an exemplary cable 50 and a connector 60.

The cable sleeve assembly 1 can be mounted on a part 40, such as a vehicle body part 40. The cable sleeve assembly 1 comprises a cable sleeve 10 for receiving one or more cables 50 (as best seen in Fig. 3), such as a harness for a vehicle. The cable sleeve assembly 1 further comprises connection means 20 comprising an opening 23 configured to receive and to substantially hold the cable sleeve 10. The connection means 20 is configured to be mounted on the part 40, such as the vehicle body part. In the example of the figures, the connection means 20 is split into at least two pieces 21, 22, which allows the size of the opening 23 to be increased and/or decreased.

The maximum dimension of the opening 23 can be the diameter D if the opening has a substantially circular shape. The minimum dimension W of a connector 60 seen in a plane projecting through the opening 23 may be a length or width along said plane (as indicated in Fig. 3).

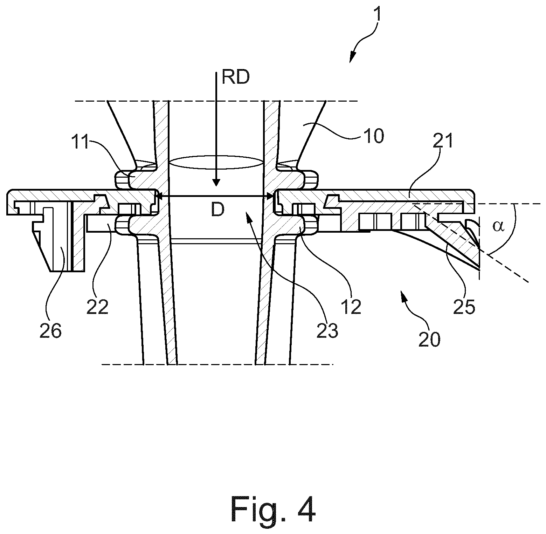

**Fig. 4** illustrates the embodiment of Fig. 1 in a cross-sectional view. The cable sleeve 10 comprises two circumferential protrusions 11, 12 that are spaced apart, thereby defining a circumferential recess in between along the axial direction of the cable sleeve 10 (e.g., the receiving direction RD). The protrusions 11, 12 may extend outward to about at least 2%, preferably at least 5%, preferably at least 10% of a dimension of the opening 23, such as the diameter D of the opening 23, or of the cable sleeve 10, such as a diameter of the cable sleeve 10, perpendicular to the receiving direction RD. This extension of the protrusions 11, 12 allows the cable sleeve 10 to be held securely in place.

In this example, the at least two pieces 21, 22 are separable and connectable via a clip connection 24 in a direction perpendicularly to the receiving direction RD. The clip connection 24 comprises a lever 25 protruding away from the connection means 20 by an angle α of between 20° to 70°, preferably 30° to 60°, preferably 40° to 50°. As can be gathered from Fig. 4, the angle α is formed by the protruding direction of the lever 25 and the plane defined by the connection means 20.

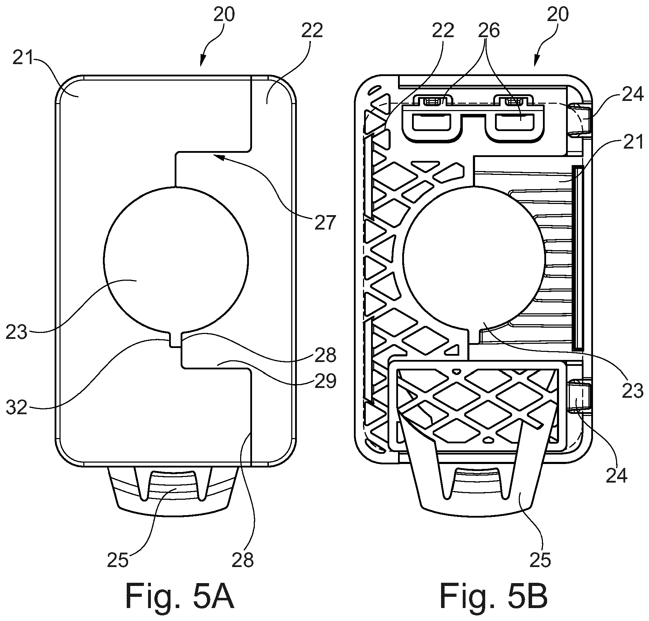

**Fig. 5A** illustrates the connection means 20 of the embodiment of Fig. 1 in a top view and **Fig. 5B** illustrates the same embodiment in a bottom view.

As can be seen, split 27 (merely one is indicated for brevity in Fig. 5A) along the connection means 20 may be substantially symmetrical with respect to the opening 23, thereby comprising two splits 27, 27 leading from an inner surface of the opening 23 to an outer surface of the connection means 20. Each of the two substantially symmetrical splits 27, 27 may comprise two substantially parallel edges 28 spaced apart by an edge 29 that is arranged substantially perpendicular to the two parallel edges 28.

The connection means 20 comprises one or more attachment clips 26 for mounting the connection means 20 on the vehicle body part 40. As can be seen in Fig. 5A, the connection means 20 may have one smooth surface, and as seen in Fig. 5B, the connection means 20 may have a structured surface on an opposing side. The attachment clips 26 and the lever 25 are provided on the structured surface of the connection means 20.

The opening 23 encompasses at least 10% and/or at most 90% of the area of the connection means 20 seen in a receiving direction RD of the cable sleeve 10 to the opening 23. Said area of the connection means 20 is the overall area that can be seen in Figs. 5A or 5B. Said area may not include the area of the lever 25.

The opening 23 in the assembled state is designed to be rather small as described elsewhere herein. Hence, the opening 23 only encompasses a rather small area of the mounting clip 20, but the area encompassed by the opening 23 should be sufficient enough to properly receive the cable sleeve 10.

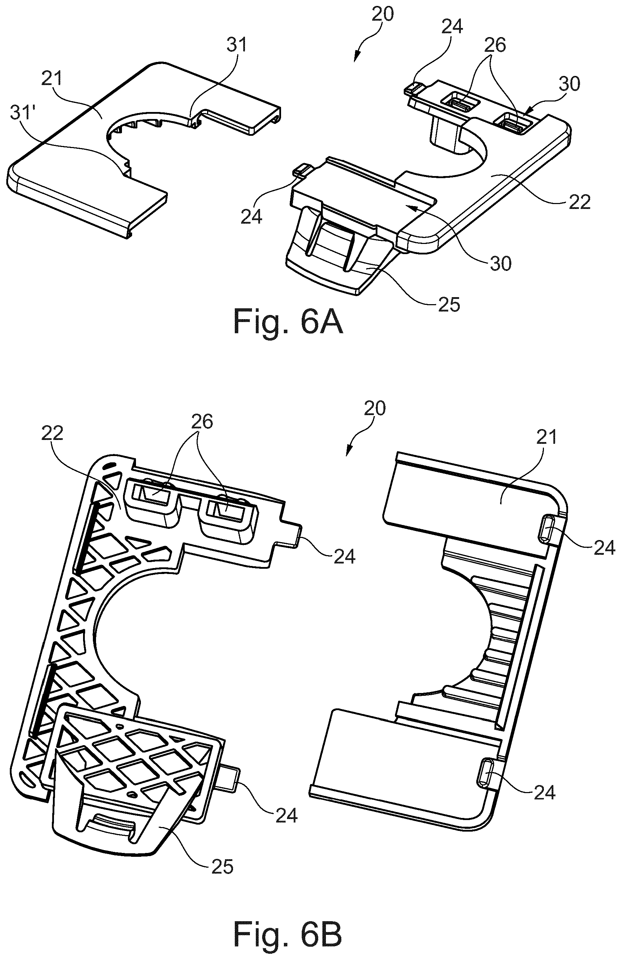

**Fig. 6A** illustrates the connection means 20 of the embodiment of Fig. 1 in an oblique view from the top. **Fig. 6B** illustrates the same embodiment in an oblique view from the bottom. In Figs. 6A, 6B, the connection means 20 are depicted in a disassembled state. As can be seen, the opening 23 (which is formed when the at least two pieces 21, 22 are assembled) is split substantially in two halves such that each of the at least two pieces 21, 22 comprises a substantially semi-circular recess arranged on an outer surface thereof. It is understood that the size of the opening 23 can be arbitrarily increased and/or decreased by way of a relative movement of the at least two pieces 21, 22.

Further, by virtue of the exploded view in Figs. 6A, 6B, it can be realized that the at least two pieces 21, 22 at least partially overlap one another in the assembled state. The overlap may be recognized as seen in the receiving direction RD as described herein. For the purpose of said overlapping, piece 22 may comprise one or more, preferably two recessed areas 30 on two opposing sides in proximity to the opening 23. Each of the recessed areas 30 may expand to about between 80% to 95% of piece 22 measured in a direction parallel to the plane projecting through the opening 23. One end of each of the recessed portions 30 may be provided with a latch, engaging into a respective aperture of the other piece 21 to form the clip connection 24. Correspondingly, the other piece 21 may comprise a respective protruding area that substantially contacts the recessed portions 30 of piece 22.

As can be seen From Fig. 6A, piece 21 comprises an inner edge 31 and a further inner edge 31'. These inner edges 31, 31' may be opposite to one another. This may be particularly the case, when opening 23 is split into two halves, such that each of the pieces 21, 22 comprises a semi-circular shaped recess. The inner edges 31, 31' are non-symmetrical with respect to one another. This has the advantage that once the pieces 21, 22 are assembled, there remains a gap 32, which may also be referred to as a slot 32, between the pieces 21, 22. This gap 32 can be best seen in Fig. 5A. The gap 32 may be provided at an outer side of the opening 23. The gap 32 may be provided in direct proximity of the opening 23 at a circumference thereof. The gap 32 may slightly increase the area of the opening 23. The gap 32 facilitates that a circumferential protrusion 11, 12 of the cable sleeve 10 can be received therein. This ensures a proper assembly.

The non-symmetrical inner edges 31, 31' have the further advantage that they constitute a poka yoke assembly of pieces 21, 22, i.e., assembly of pieces 21, 22 is improved as any failure during assembly can be circumvented.

It is to be noted that the scope of protection is determined by the claims and is not limited by the embodiments disclosed in the above figures.

### 6. List of reference signs

- 1: cable sleeve assembly
- 10: cable sleeve
- 11: protrusion
- 12: protrusion

- 20: connection means
- 21: first piece
- 22: second piece
- 23: opening
- 24: clip connection
- 25: lever
- 26: attachment clips
- 27: split
- 28: parallel edges
- 29: perpendicular edge
- 30: recessed area
- 31: inner edge
- 31': inner edge
- 32: gap

- 40: part (e.g., of a vehicle)

- 50: harness / one or more cables
- 60: connector

- RD: receiving direction
- W: width or length of a connector (minimum dimension of the connector seen in a plane projecting through the opening)
- D: maximum dimension of the opening
- α: angle of lever

## Claims

1. A cable sleeve assembly (1) for mounting on a part (40), such as a vehicle body part, the cable sleeve assembly (1) comprising:
a cable sleeve (10) for receiving one or more cables, such as a harness for a vehicle;
a connection means (20) comprising an opening (23) configured to receive and to substantially hold the cable sleeve (10), the connection means (20) configured to be mounted on the part (40), such as the vehicle body part;
wherein the connection means (20) is split into at least in two pieces (21, 22), preferably two pieces (21, 22), which allows the size of the opening (23) to be increased and/or decreased,
wherein the cable sleeve (10) comprises at least two circumferential protrusions (11, 12) on its periphery spaced apart to one another along a receiving direction (RD) of the cable sleeve (10) to the opening (23), wherein the at least two circumferential protrusions (11, 12) are substantially abutting the connection means (20) in between.

2. The cable sleeve assembly (1) according to claim 1, wherein the two pieces (21, 22) are separable to define a disassembled state and connectable to define an assembled state, preferably via a clip connection (24),
optionally, wherein the clip connection (24) comprises a lever (25) protruding away from the connection means (20) by an angle (α) of between 20° to 70°, preferably 30° to 60°, preferably 40° to 50°.

3. The cable sleeve assembly (1) according to claim 2, wherein the two pieces (21, 22) at least partially overlap one another in the assembled state as seen in a receiving direction (RD) of the cable sleeve (10) to the opening (23),
preferably wherein the area of overlapping is at least 10%, preferably at least 20%, preferably at least 30% of the area of the connection means (20) seen in a receiving direction (RD) of the cable sleeve (10) to the opening (23).

4. The cable sleeve assembly (1) according to claim 2 or 3, wherein the opening (23) has a substantially circular shape and substantially fully surrounds a portion of the cable sleeve (10) in the assembled state,
wherein the opening (23) is split substantially in at least two halves, preferably two halves, such that each of the pieces (21, 22) comprises a substantially circular segment shaped recess, preferably a semi-circular shaped recess, in an outer surface thereof.

5. The cable sleeve assembly (1) according to any one of claims 2 to 4, wherein the maximum dimension (D) of the opening (23) in the assembled state is smaller than a minimum dimension (W) of a connector (60) attached to the one or more cables (50) seen in a plane projecting through the opening (23).

6. The cable sleeve assembly (1) according to any one of the preceding claims, wherein the cable sleeve (10) comprises a relatively flexible material, preferably comprising a deformable material, more preferably comprising rubber, such as ethylene-propylene-diene rubber (EPDM),
wherein the connection means (20) comprises a relatively rigid material, preferably comprising plastic material.

7. The cable sleeve assembly (1) according to any one of the preceding claims, wherein the connection means (20) is a mounting clip having a substantially flat shape, wherein the opening (23) is arranged substantially in a central position of the mounting clip.

8. The cable sleeve assembly (1) according to claim 7, wherein the mounting clip has a wall thickness in a receiving direction (RD) of the cable sleeve (10) to the opening (23) of at most 10 mm, preferably at most 5 mm, preferably at most 4 mm, preferably at most 3 mm, preferably at most 2.5 mm, preferably at most 2 mm; and/or
of at least 0.5 mm, preferably at least 1 mm, preferably at least 1.5 mm.

9. The cable sleeve assembly (1) according to any one of the preceding claims, wherein the opening (23) encompasses at least 10%, preferably at least 20%, preferably at least 30%, of the area of the connection means (20) seen in a receiving direction (RD) of the cable sleeve (10) to the opening (23), and/or
of at most 95%, preferably at most 90%, preferably at most 80%, preferably at most 60% of the area of the connection means (20) seen in a receiving direction (RD) of the cable sleeve (10) to the opening (23).

10. The cable sleeve assembly (1) according to any one of the preceding claims, wherein the connection means (20) comprises one or more attachment clips (26) for mounting the connection means (20) on the part (40), such as the vehicle body part.

11. The cable sleeve assembly (1) according to any one of the preceding claims, wherein the cable sleeve (10) is received in the opening (23) and wherein the opening (23) substantially holds, preferably clamps the cable sleeve (10),
optionally, wherein the connection means (20) is mounted on the part (40), such as the vehicle body part.

12. The cable sleeve assembly (1) according to any one of the preceding claims, wherein the cable sleeve assembly (1) comprises one or more cables received in the cable sleeve (10), the one or more cables having a connector (60) attached thereto, wherein the maximum dimension (D) of the opening (23) is smaller than a minimum dimension (W) of the connector (60) seen in a plane projecting through the opening (23).

13. A method for assembling a cable sleeve assembly (1) with one or more cables having a connector attached thereto, the method comprising:
providing a cable sleeve assembly (1) according to any one of the preceding claims 1 to 12, preferably in a disassembled state;
guiding one or more cables, such as a harness for a vehicle, having a connector attached thereto, at least partially through the cable sleeve (10);
connecting the connection means (20) so as to substantially hold the cable sleeve (10) within the opening (23), preferably to substantially clamp the cable sleeve (10) in the opening (23).

14. The method (100) according to the preceding claim, wherein the method further comprises:
after guiding one or more cables and before connecting the connection means (20): receiving and substantially holding the cable sleeve (10) in the opening (23), preferably in a circular segment shaped recess, more preferably in a semi-circular shaped recess, in an outer surface of one or both of the two pieces (21, 22),
preferably wherein connecting comprises connecting the two pieces (21, 22) via a clip connection,
preferably wherein the method further comprises mounting the connection means (20) to the part (40), such as the vehicle body part.

## Patentansprüche

1. Eine Kabelhülsenanordnung (1) zur Montage an einem Teil (40), wie etwa einem Fahrzeugkarosserieteil, wobei die Kabelhülsenanordnung (1) umfasst:
eine Kabelhülse (10) zur Aufnahme eines oder mehrerer Kabel, wie etwa eines Kabelbaums für ein Fahrzeug;
ein Verbindungsmittel (20), das eine Öffnung (23) umfasst, die so konfiguriert ist, dass sie die Kabelhülse (10) aufnimmt und im Wesentlichen hält, wobei das Verbindungsmittel (20) so konfiguriert ist, dass es an dem Teil (40), wie etwa dem Fahrzeugkarosserieteil, montiert werden kann;
wobei das Verbindungsmittel (20) in mindestens zwei Teile (21, 22), vorzugsweise zwei Teile (21, 22), aufgeteilt ist, wodurch die Größe der Öffnung (23) vergrößert und/oder verkleinert werden kann,
wobei die Kabelhülse (10) mindestens zwei umlaufende Vorsprünge (11, 12) an ihrem Umfang umfasst, die entlang einer Aufnahmerichtung (RD) der Kabelhülse (10) zur Öffnung (23) voneinander beabstandet sind, wobei die mindestens zwei umlaufenden Vorsprünge (11, 12) im Wesentlichen an dem Verbindungsmittel (20) dazwischen anliegen.

2. Die Kabelhülsenanordnung (1) nach Anspruch 1, wobei die beiden Teile (21, 22) trennbar sind, um einen demontierten Zustand zu definieren, und verbindbar sind, um einen montierten Zustand zu definieren, vorzugsweise über eine Clipverbindung (24),
optional, wobei die Clipverbindung (24) einen Hebel (25) umfasst, der von dem Verbindungsmittel (20) um einen Winkel (α) zwischen 20° bis 70°, vorzugsweise 30° bis 60°, vorzugsweise 40° bis 50°, wegragt.

3. Die Kabelhülsenanordnung (1) nach Anspruch 2, wobei die beiden Teile (21, 22) im montierten Zustand, in einer Aufnahmerichtung (RD) der Kabelhülse (10) zur Öffnung (23) gesehen, einander zumindest teilweise überlappen,
vorzugsweise, wobei die Überlappungsfläche mindestens 10 %, vorzugsweise mindestens 20 %, vorzugsweise mindestens 30 % der Fläche des Verbindungsmittels (20), in einer Aufnahmerichtung (RD) der Kabelhülse (10) zur Öffnung (23) gesehen, ist.

4. Die Kabelhülsenanordnung (1) nach Anspruch 2 oder 3, wobei die Öffnung (23) eine im Wesentlichen kreisförmige Form hat und einen Abschnitt der Kabelhülse (10) im montierten Zustand im Wesentlichen vollständig umgibt,
wobei die Öffnung (23) im Wesentlichen in mindestens zwei Hälften, vorzugsweise zwei Hälften, aufgeteilt ist, so dass jedes der Teile (21, 22) eine im Wesentlichen kreissegmentförmige Aussparung, vorzugsweise eine halbkreisförmige Aussparung, in einer Außenfläche davon umfasst.

5. Die Kabelhülsenanordnung (1) nach einem der Ansprüche 2 bis 4, wobei die maximale Abmessung (D) der Öffnung (23) im montierten Zustand kleiner ist als eine minimale Abmessung (W) eines Verbinders (60), der an dem einen oder den mehreren Kabeln (50) angebracht ist, gesehen in einer Ebene, die durch die Öffnung (23) hindurchragt.

6. Die Kabelhülsenanordnung (1) nach einem der vorhergehenden Ansprüche, wobei die Kabelhülse (10) ein relativ flexibles Material umfasst, vorzugsweise ein verformbares Material, besonders bevorzugt Gummi, wie Ethylen-Propylen-Dien-Gummi (EPDM),
wobei das Verbindungsmittel (20) ein relativ starres Material umfasst, vorzugsweise Kunststoffmaterial.

7. Die Kabelhülsenanordnung (1) nach einem der vorhergehenden Ansprüche, wobei das Verbindungsmittel (20) ein Montageclip mit einer im Wesentlichen flachen Form ist, wobei die Öffnung (23) im Wesentlichen in einer zentralen Position des Montageclips angeordnet ist.

8. Die Kabelhülsenanordnung (1) nach Anspruch 7, wobei der Montageclip eine Wanddicke in einer Aufnahmerichtung (RD) der Kabelhülse (10) zur Öffnung (23) von höchstens 10 mm, vorzugsweise höchstens 5 mm, vorzugsweise höchstens 4 mm, vorzugsweise höchstens 3 mm, vorzugsweise höchstens 2,5 mm, vorzugsweise höchstens 2 mm, hat; und/oder
von mindestens 0,5 mm, vorzugsweise mindestens 1 mm, vorzugsweise mindestens 1,5 mm.

9. Die Kabelhülsenanordnung (1) nach einem der vorhergehenden Ansprüche, wobei die Öffnung (23) mindestens 10 %, vorzugsweise mindestens 20 %, vorzugsweise mindestens 30 %, der Fläche des Verbindungsmittels (20), in einer Aufnahmerichtung (RD) der Kabelhülse (10) zur Öffnung (23) gesehen, umschließt, und/oder
von höchstens 95 %, vorzugsweise höchstens 90 %, vorzugsweise höchstens 80 %, vorzugsweise höchstens 60 % der Fläche des Verbindungsmittels (20), in einer Aufnahmerichtung (RD) der Kabelhülse (10) zur Öffnung (23) gesehen.

10. Die Kabelhülsenanordnung (1) nach einem der vorhergehenden Ansprüche, wobei das Verbindungsmittel (20) einen oder mehrere Befestigungsclips (26) zur Montage des Verbindungsmittels (20) an dem Teil (40), wie etwa dem Fahrzeugkarosserieteil, umfasst.

11. Die Kabelhülsenanordnung (1) nach einem der vorhergehenden Ansprüche, wobei die Kabelhülse (10) in der Öffnung (23) aufgenommen ist und wobei die Öffnung (23) die Kabelhülse (10) im Wesentlichen hält, vorzugsweise festklemmt,
optional, wobei das Verbindungsmittel (20) an dem Teil (40), wie etwa dem Fahrzeugkarosserieteil, montiert ist.

12. Die Kabelhülsenanordnung (1) nach einem der vorhergehenden Ansprüche, wobei die Kabelhülsenanordnung (1) ein oder mehrere in der Kabelhülse (10) aufgenommene Kabel umfasst, wobei an dem einen oder den mehreren Kabeln ein Verbinder (60) angebracht ist, wobei die maximale Abmessung (D) der Öffnung (23) kleiner ist als eine minimale Abmessung (W) des Verbinders (60), gesehen in einer Ebene, die durch die Öffnung (23) hindurchragt.

13. Ein Verfahren zum Zusammenbau einer Kabelhülsenanordnung (1) mit einem oder mehreren Kabeln, an denen ein Verbinder angebracht ist, wobei das Verfahren umfasst:
Bereitstellen einer Kabelhülsenanordnung (1) nach einem der vorhergehenden Ansprüche 1 bis 12, vorzugsweise in einem demontierten Zustand;
Führen eines oder mehrerer Kabel, wie etwa eines Kabelbaums für ein Fahrzeug, an denen ein Verbinder angebracht ist, zumindest teilweise durch die Kabelhülse (10);
Verbinden des Verbindungsmittels (20), um die Kabelhülse (10) im Wesentlichen innerhalb der Öffnung (23) zu halten, vorzugsweise um die Kabelhülse (10) im Wesentlichen in der Öffnung (23) festzuklemmen.

14. Das Verfahren (100) nach dem vorhergehenden Anspruch, wobei das Verfahren ferner umfasst:
nach dem Führen eines oder mehrerer Kabel und vor dem Verbinden des Verbindungsmittels (20): Aufnehmen und im Wesentlichen Halten der Kabelhülse (10) in der Öffnung (23), vorzugsweise in einer kreissegmentförmigen Aussparung, besonders bevorzugt in einer halbkreisförmigen Aussparung, in einer Außenfläche eines oder beider der beiden Teile (21, 22),
vorzugsweise wobei das Verbinden umfasst Verbinden der beiden Teile (21, 22) über eine Clipverbindung,
vorzugsweise wobei das Verfahren ferner umfasst Montieren des Verbindungsmittels (20) an dem Teil (40), wie etwa dem Fahrzeugkarosserieteil.

## Revendications

1. Un ensemble de manchon de câble (1) à monter sur une pièce détachée (40), telle qu'une pièce détachée de carrosserie de véhicule, l'ensemble de manchon de câble (1) comprenant :
un manchon de câble (10) destiné à recevoir un ou plusieurs câbles, tel qu'un faisceau de câble pour un véhicule ;
un moyen de connexion (20) comprenant une ouverture (23) configurée pour recevoir et pour sensiblement maintenir le manchon de câble (10), le moyen de connexion (20) étant configuré pour être monté sur la pièce détachée (40), telle que la pièce détachée de carrosserie de véhicule ;
dans lequel le moyen de connexion (20) est fractionné en au moins deux pièces (21, 22), de préférence deux pièces, qui permettent d'augmenter et/ou de réduire la taille de l'ouverture (23),
dans lequel le manchon de câble (10) comprend à sa périphérie au moins deux reliefs circonférentiels (11, 12) espacés l'un de l'autre le long d'une direction de réception (RD) du manchon de câble (10) vers l'ouverture (23), les au moins deux reliefs circonférentiels (11, 12) venant sensiblement en butée contre le moyen de connexion (20) entre eux deux.

2. L'ensemble de manchon de câble (1) selon la revendication 1, dans lequel les deux pièces (21, 22) sont séparables pour définir un état désassemblé et connectables pour définir un état assemblé, de préférence via une connexion clipsée (24),
éventuellement dans lequel la connexion clipsée (24) comprend un levier (25) faisant saillie en éloignement du moyen de connexion (20) d'un angle (α) de 20° à 60°, de préférence 30° à 60°, de préférence 40° à 50°.

3. L'ensemble de manchon de câble (1) selon la revendication 2, dans lequel les deux pièces (21, 22) se recouvrent au moins partiellement l'une l'autre à l'état assemblé vu depuis une direction de réception (RD) du manchon de câble (10) vers l'ouverture (23), de préférence dans lequel la surface de recouvrement est d'au moins 10 %, de préférence d'au moins 20 %, de préférence d'au moins 30 % de la surface du moyen de connexion (20) vu depuis une direction de réception (RD) du manchon de câble (10) vers l'ouverture (23).

4. L'ensemble de manchon de câble (1) selon la revendication 2 ou 3, dans lequel l'ouverture (23) a une forme sensiblement circulaire et entoure sensiblement en totalité une partie du manchon de câble (10) à l'état assemblé,
dans lequel l'ouverture (23) est fractionnée sensiblement en au moins deux moitiés, de préférence deux moitiés, de sorte que chacune des pièces (21, 22) comprenne un creux sensiblement en forme d'arc de cercle, de préférence un creux de forme semi-circulaire, dans une surface externe de celle-ci.

5. L'ensemble de manchon de câble (1) selon l'une des revendications 2 à 4, dans lequel la dimension maximale (D) de l'ouverture (23) à l'état assemblé est inférieure à une dimension minimale (W) d'un connecteur (60) fixé aux un ou plusieurs câbles (50) vu dans un plan se projetant au travers de l'ouverture (23).

6. L'ensemble de manchon de câble (1) selon l'une des revendications précédentes, dans lequel le manchon de câble (10) comprend un matériau relativement flexible, de préférence comprenant un matériau déformable, plus préférablement comprenant du caoutchouc, tel qu'un caoutchouc éthylène-propylène-diène (EPDM),
dans lequel le moyen de connexion (20) comprend un matériau relativement rigide, de préférence comprenant une matière plastique.

7. L'ensemble de manchon de câble (1) selon l'une des revendications précédentes, dans lequel le moyen de connexion est un clip de montage ayant une forme sensiblement plate, l'ouverture (23) étant agencée sensiblement dans une position centrale du clip de montage.

8. L'ensemble de manchon de câble (1) selon la revendication 7, dans lequel le clip de montage présente une épaisseur de paroi dans une direction de réception (RD) du manchon de câble (10) vers l'ouverture (23) d'au plus 10 mm, de préférence d'au plus 5 mm, de préférence d'au plus 4 mm, de préférence d'au plus 3 mm, de préférence d'au plus 2,5 mm, de préférence d'au plus 2 mm ; et/ou
d'au moins 0,5 mm, de préférence d'au moins 1 mm, de préférence d'au moins 1,5 mm.

9. L'ensemble de manchon de câble (1) selon l'une des revendications précédentes, dans lequel l'ouverture (23) s'étend sur au moins 10 %, de préférence au moins 20 %, de préférence au moins 30 % de la surface du moyen de connexion (20) vu dans une direction de réception (RD) du manchon de câble (10) vers l'ouverture (23), et/ou d'au plus 95 %, de préférence d'au plus 90 %, de préférence d'au plus 80 %, de préférence d'au plus 60 % de la surface du moyen de connexion (20) vu dans une direction de réception (RD) du manchon de câble (10) vers l'ouverture (23).

10. L'ensemble de manchon de câble (1) selon l'une des revendications précédentes, dans lequel le moyen de connexion (20) comprend un ou plusieurs clips de fixation (26) pour le montage du moyen de connexion (20) sur la pièce détachée (40), telle que la pièce détachée de carrosserie de véhicule.

11. L'ensemble de manchon de câble (1) selon l'une des revendications précédentes, dans lequel le manchon de câble (10) est reçu dans l'ouverture (23) et dans lequel l'ouverture (23) maintient sensiblement, de préférence pince, le manchon de câble (10),
éventuellement dans lequel le moyen de connexion (20) est monté sur la pièce détachée (40), telle que la pièce détachée de carrosserie de véhicule.

12. L'ensemble de manchon de câble (1) selon l'une des revendications précédentes, dans lequel l'ensemble de manchon de câble (1) comprend un ou plusieurs câbles reçus dans le manchon de câble (10), les un ou plusieurs câbles possédant un connecteur (60) qui leur est assujetti, la dimension maximale (D) de l'ouverture (23) étant inférieure à une dimension minimale (W) du connecteur (60) vu dans un plan se projetant au travers de l'ouverture (23).

13. Un procédé d'assemblage d'un ensemble de manchon de câble (1) avec un ou plusieurs câbles munis d'un connecteur qui leur est assujetti, le procédé comprenant :
l'obtention d'un ensemble de manchon de câble (1) selon l'une des revendications 1 à 12 précédentes, de préférence dans un état désassemblé ;
le guidage d'un ou plusieurs câbles, tels qu'un faisceau de câble pour un véhicule, ayant un connecteur qui leur est assujetti, au moins partiellement au travers du manchon de câble (10) ;
la connexion du moyen de connexion (20) de manière à sensiblement maintenir le manchon de câble (10) à l'intérieur de l'ouverture (23), de préférence à sensiblement pincer le manchon de câble (10) dans l'ouverture (23).

14. Le procédé (100) selon la revendication précédente, dans lequel le procédé comprend en outre :
après le guidage d'un ou plusieurs câbles et avant la connexion du moyen de connexion (20) : la réception et le maintien substantiel du manchon de câble (10) dans l'ouverture (23), de préférence dans un creux en forme d'arc de cercle, plus préférablement dans un creux de forme semi-circulaire, dans une surface externe de l'une des deux pièces (21, 22), ou des deux,
de préférence dans lequel la connexion comprend la connexion des deux pièces (21, 22) via une connexion clipsée,
de préférence dans lequel le procédé comprend en outre le montage du moyen de connexion (20) sur la pièce détachée (40), telle que la pièce détachée de carrosserie de véhicule.
